# EUROPEAN PATENT SPECIFICATION

(11) **EP 4 489 353 B1**
(45) Date of publication and mention of the grant of the patent: **25.11.2026**
(21) Application number: 23203368.8
(22) Date of filing: 13.10.2023
(51) Int. Cl.: H04L 12/40, H04L 12/413, H04L 12/46

(54) **CAN COMMUNICATION APPARATUS AND METHOD**
VORRICHTUNG UND VERFAHREN ZUR KOMMUNIKATION ÜBER CANS
APPAREIL ET PROCÉDÉ DE COMMUNICATION CAN

(30) Priority: 03.07.2023 KR 20230085835
(43) Date of publication of application: 08.01.2025
(73) Proprietor: Samsung SDI Co., Ltd., Yongin-si, Gyeonggi-do 17084 (KR)
(72) Inventor: Park, Jinhyuk, 17084 Yongin-si, Gyeonggi-do (KR); La, Taehyoung, 17084 Yongin-si, Gyeonggi-do (KR); Kim, Yoonjoong, 17084 Yongin-si, Gyeonggi-do (KR)
(74) Representative: Gulde & Partner

(56) References cited:
- US-A1- 2012 236 525
- US-A1- 2018 287 816
- US-A1- 2020 204 397

## Description

### BACKGROUND OF THE INVENTION

### (a) Field of the Invention

The present disclosure relates to a controller area network (CAN) communication apparatus and method.

### (b) Description of the Related Art

An energy Storage System (ESS) refers to a device that stores electricity and makes it available when needed. The ESS may include a battery, a battery management system (BMS) and a power conversion system (PCS) or an energy management system (EMS).

The ESS may transmit and receive various information such as battery status and protection operation within the system through a controller area network (CAN) communication.

The composition and installation environment of ESS are varied, and as a result, the actual wire length of CAN communication can be long. At this time, if a problem occurred due to the communication distance, an external CAN repeater may be installed at a certain distance.

For example, US 2020/0204397 A1 discloses a relay apparatus includes a relay unit to which a plurality of communication lines are connected, and that relays a message received from one communication line, by transmitting the message on another communication line, a switch for switching between a connected state where at least two communication lines included in the plurality of communication lines are connected directly and a separated state where the communication lines are separated apart, and a relay rule switching unit for switching a message relay rule for the relay unit depending on a switching state of the switch. US 2012/0236525 A1 describes a GateWay (GW) having a shape of a substantially-flat rectangular parallelepiped and including terminals on one wide surface or both wide surfaces, GWs are stacked on each other so as to connect first corresponding terminals while connecting second corresponding terminals. US 2018/0287816 A1 relates to a relay device including a signal processing and forwarding pathway and a bypass connection pathway. The signal processing and forwarding pathway processes a signal received from one bus of a plurality of buses, and forwards the processed signal to another bus. The bypass connection pathway connects the one bus to the other bus, bypassing the signal processing and forwarding pathway.

The external CAN repeater may be a device used to extend the distance of the CAN bus and the node. Using the external CAN repeater can solve the problem of weakening communication due to distance, but it must be serially connected to the CAN bus from the outside. Furthermore, because there is no feedback or monitoring of the external CAN repeater, communication reliability may be reduced and the cost of installing the external CAN repeater may be increased.

### SUMMARY OF THE INVENTION

The present invention is set out in the appended set of claims, wherein the drawings and respective description relate to advantageous embodiments thereof.

According to the present invention a CAN communication apparatus and method capable of increasing a physically limited CAN communication distance without installing an external CAN repeater is provided.

The present invention is directed to a controller area network (CAN) communication apparatus that communicates through a CAN bus may be provided. The CAN communication apparatus includes a CAN communication circuit including a first CAN transceiver connected to the CAN bus and transmitting and receiving CAN data through the first CAN transceiver; and if set to repeater mode, a repeater circuit that relays CAN data on the CAN bus by setting a connection with the CAN bus.

The CAN communication circuit further includes a micro controller unit (MCU) for setting the repeater mode to on or off according to a setup signal.

The repeater circuit includes: a first switch serially connected to the CAN bus; a second CAN transceiver connected to the CAN bus; a third CAN transceiver connected to the CAN bus; an arbitration logic for transmitting and receiving CAN data between the second CAN transceiver and the third CAN transceiver; a second switch connected between the CAN bus and the second CAN transceiver; and a third switch connected between the CAN bus and the third CAN transceiver, and the MCU may set the first switch to an open state and set the second switch and the third switch to a closed state, based on the setup signal, to turn on the repeater mode. The arbitration logic feedbacks CAN data transmitted and received between the second CAN transceiver and the third CAN transceiver to the MCU, and the MCU monitors an operation state of the repeater mode using feedbacked CAN data.

The MCU sets the first switch to a closed state and sets the second switch and the third switch to an open state, based on the setup signal, to turn off the repeater mode.

The repeater circuit may further include a fourth switch for supplying a power voltage to the second CAN transceiver and the third CAN transceiver or cutting off the power voltage, and the MCU may control the fourth switch to be closed if the repeater mode is turned on.

The present invention is also directed to a controller area network (CAN) communication method of a CAN communication apparatus connected to the CAN bus. The CAN communication method includes: performing CAN communication through a first CAN transceiver connected to the CAN bus; operation in a repeater mode by setting a connection with the CAN bus based on a setup signal; relaying CAN data on the CAN bus in the repeater mode; and monitoring an operation state of the repeater mode using CAN data transmitted and received between a second CAN transceiver and a third CAN transceiver.

The CAN communication apparatus includes: a micro controller unit (MCU) controlling the CAN communication through the first CAN transceiver; a first switch serially connected to the CAN bus; a second CAN transceiver connected to the CAN bus; a third CAN transceiver connected to the CAN bus; an arbitration logic for transmitting and receiving CAN data between the second CAN transceiver and the third CAN transceiver; a second switch connected between the CAN bus and the second CAN transceiver; and a third switch connected between the CAN bus and the third CAN transceiver, and the operating in the repeater mode may include setting the first switch to an open state and setting the second switch and the third switch to a closed state.

The CAN communication method may further include turning off the repeater mode by disconnecting from the CAN bus based on the setup signal, and wherein the turning off the repeater mode may include setting the first switch to a closed state and setting the second switch and the third switch to an open state.

The operating in the repeater mode may further include supplying a power supply voltage to the second CAN transceiver and the third CAN transceiver, and the turning off the repeater mode may further include cutting off the power supply voltage to the second CAN transceiver and the third CAN transceiver.

The monitoring may include transmitting CAN data generated by the MCU through the first CAN transceiver; and monitoring the operation state of the repeater mode through comparison of CAN data generated by the MCU and CAN data transmitted and received between the second CAN transceiver and the third CAN transceiver.

### BRIEF DESCRIPTION OF THE DRAWINGS

FIG. 1 is a diagram showing an example of a CAN communication network according to an embodiment.
FIG. 2 is a diagram illustrating a CAN communication apparatus according to an embodiment.
FIG. 3 is a diagram illustrating an operation of a CAN communication apparatus if a repeater mode is off according to an embodiment.
FIG. 4 is a diagram illustrating an operation of a CAN communication apparatus if a repeater mode is on according to an embodiment.
FIG. 5 is a flowchart illustrating a method of monitoring an operating state of a repeater mode according to an embodiment.
FIG. 6 is a flowchart illustrating a repeater mode setting method according to an embodiment.

### DETAILED DESCRIPTION OF THE EMBODIMENTS

Hereinafter, embodiments of the disclosure will be described in detail with reference to the attached drawings so that a person of ordinary skill in the art may easily implement the disclosure. As those skilled in the art would realize, the described embodiments may be modified in various different ways, all without departing from the scope of the disclosure. The drawings and description are to be regarded as illustrative in nature and not restrictive. Like reference numerals designate like elements throughout the specification. In the flowchart described with reference to the drawings in this specification, the order of operations may be changed, several operations may be merged, some operations may be divided, and specific operations may not be performed.

Throughout the specification and claims, if a part is referred to "include" a certain element, it may mean that it may further include other elements rather than exclude other elements, unless specifically indicated otherwise.

In addition, expressions described in the singular may be interpreted in the singular or plural unless explicit expressions such as "one" or "single" are used.

In addition, terms including an ordinal number, such as first, second, etc., may be used to describe various elements, but the elements are not limited by the terms. The above terms are used only for the purpose of distinguishing one element from another element. For example, without departing from the scope of the present disclosure, a first element may be referred to as a second element, and similarly, a second element may be referred to as a first element.

Furthermore, if a component is referred to be "connected" with another component, it includes not only the case where two components are "directly connected" but also the case where two components are "indirectly or non-contactedly connected" with another component interposed therebetween, or the case where two components are "electrically connected." On the other hand, if an element is referred to as "directly connected" to another element, it should be understood that no other element exists in the middle.

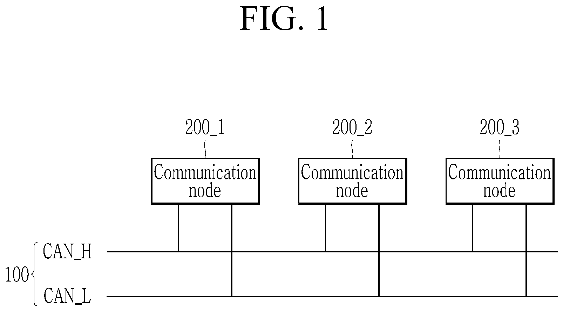

FIG. 1 is a diagram showing an example of a CAN communication network according to an embodiment.

Referring to FIG. 1, a controller area network (CAN) communication network may include a plurality of communication nodes 200_1, 200_2, and 200_3 connected through a CAN bus 100. In FIG. 1, only three communication nodes 200_1, 200_2, and 200_3 are shown for convenience.

The communication nodes 200_1, 200_2, and 200_3 may be connected in parallel to the CAN bus 100 and may transmit and receive CAN data to each other. The communication nodes 200_1, 200_2, and 200_3 may be CAN communication apparatuses that perform CAN communication.

The communication nodes 200_1, 200_2, and 200_3 may be, for example, energy storage system (ESS), battery management system (BMS), power conversion system (PCS) and power management system (PMS) or energy management system (EMS). The communication nodes 200_1, 200_2, and 200_3 may be, for example, electronic control units (ECUs) in a vehicle.

Below, for convenience, the communication nodes 200_1, 200_2, and 200_3 will be referred to as CAN communication apparatuses.

The CAN communication apparatuses 200_1, 200_2, and 200_3 according to an embodiment may basically operate in a CAN communication mode that performs CAN communication, and may optionally operate in a repeater mode simultaneously with the CAN communication mode.

If the CAN communication apparatuses 200_1, 200_2, and 200_3 operate in a repeater mode, they may perform a repeater function of CAN data.

The CAN bus 100 may transfer a differential signal corresponding to CAN data using two twisted pairs called a CAN high line CAN_H and a CAN low line CAN_L.

The CAN bus 100 may have a limited maximum communication distance that can connect CAN communication apparatuses at both ends. Therefore, a CAN communication apparatus outside the maximum communication distance cannot perform CAN communication with a CAN communication apparatus within the maximum communication distance. However, if the CAN communication apparatus at both ends operates in repeater mode, it is possible to relay CAN data with the CAN communication apparatus outside the maximum communication distance, thereby increasing the maximum communication distance that is physically limited on the CAN bus 100.

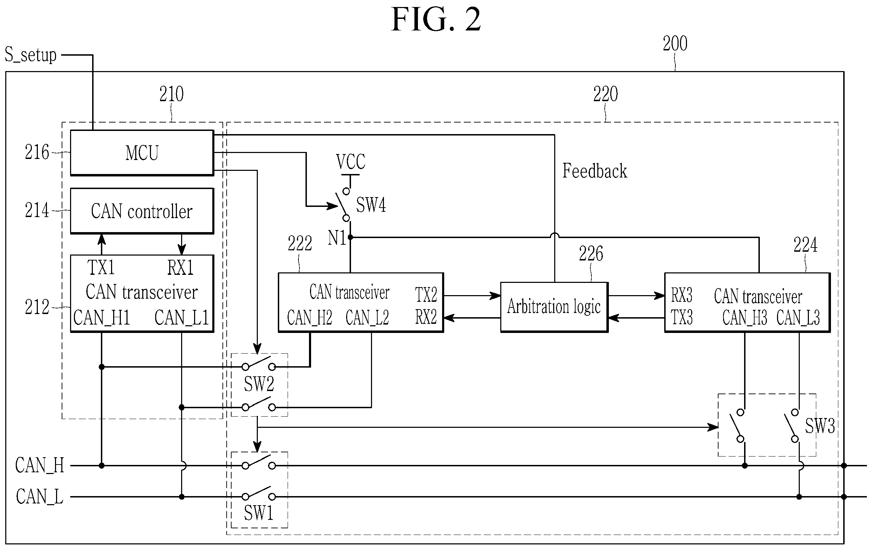

FIG. 2 is a diagram illustrating a CAN communication apparatus according to an embodiment.

Referring to FIG. 2, the CAN communication apparatus 200 includes a CAN communication circuit 210 and a repeater circuit 220.

The CAN communication circuit 210 may perform CAN communication.

The CAN communication circuit 210 includes a CAN transceiver 212, a CAN controller 214, and a micro controller unit MCU 216. The micro controller unit MCU 216 may control the CAN communication through the first CAN transceiver 212.

The CAN transceiver 212, the CAN controller 214, and the MCU 216 may operate in a CAN communication mode. The CAN communication mode may be a basic operation mode of the CAN communication circuit 210.

The CAN transceiver 212 may include a CAN high terminal CAN_H1, a CAN low terminal CAN_L1, a transmission terminal TX1, and a reception terminal RX1. The CAN high terminal CAN_H1 and the CAN low terminal CAN_L1 may be connected to the CAN high line CAN_H and the CAN low line CAN_L of the CAN bus 100, respectively. The transmission terminal TX1 and the reception terminal RX1 may be connected to the CAN controller 214.

If the CAN transceiver 212 receives a transmission signal of a **TTL** (Transistor Transistor Logic) level from the CAN controller 214 through the reception terminal RX1, it may convert the transmission signal into a differential signal of the CAN communication standard and output the differential signal to the CAN high line CAN_H and the CAN low line CAN_L of the CAN bus 100. If the CAN transceiver 212 receives a differential signal from the CAN high line CAN_H and the CAN low line CAN_L of the CAN bus 100, it may convert the differential signal into a reception signal of a **TTL** level and transmit the CAN controller 214 through the transmission terminal TX1.

The CAN controller 214 may transmit and receive a transmission signal or reception signal of a **TTL** level according to a command of the MCU 216. The CAN controller 214 may check whether the CAN bus 100 is being used by a CAN controller of another CAN communication apparatus, and if the CAN bus 100 is being used by the CAN controller of another CAN communication apparatus, all communication apparatuses connected to the CAN bus 100 may check data necessary for itself through an identifier (ID) value included in the CAN data. At this time, unnecessary data may be ignored and only the data necessary for oneself may be received. Meanwhile, if a plurality of CAN communication apparatuses simultaneously transmit data to the CAN bus 100, the highest priority CAN communication apparatus may automatically access to the CAN bus 100 based on the ID value. The data of a CAN communication apparatus with a high priority may be guaranteed the right to use the CAN bus 100, and other CAN communication apparatuses may wait and automatically perform transmission in the next bus cycle.

The MCU 216 may generate CAN data to be shared with different CAN communication apparatuses through CAN communication. The MCU 216 may command the CAN controller 214 to transmit the generated CAN data or receive CAN data from the CAN controller 214.

A general CAN communication apparatus may include only the CAN communication circuit 210.

Meanwhile, the CAN communication apparatus 200 according to the embodiment may further include a repeater circuit 220 to selectively operate in a repeater mode based on the setup signal S_setup. The repeater circuit 220 may selectively operate based on the setup signal S_setup. The repeater circuit 220 may set a connection with the CAN bus 100 if set to the relay mode and perform a repeater function of CAN communication.

The repeater circuit 220 may further include CAN transceivers 222 and 224, arbitration logic 226, and switches SW1, SW2, SW3, and SW4.

The repeater circuit 220 may include a first switch serially connected to the CAN bus 100; a second CAN transceiver 222 connected to the CAN bus 100; a third CAN transceiver 224 connected to the CAN bus 100; an arbitration logic 226 for transmitting and receiving CAN data between the second CAN transceiver 222 and the third CAN transceiver 224; a second switch connected between the CAN bus 100 and the second CAN transceiver 222; and a third switch connected between the CAN bus 100 and the third CAN transceiver 224, and the MCU 216 may set the first switch to an open state and may set the second switch and the third switch to a closed state, based on the setup signal S, to turn on the repeater mode. The switches SW1 may be connected in series to a CAN high line CAN_H and a CAN low line CAN_L of the CAN bus 100, respectively. Therefore, if the switches SW1 are in an open state, a corresponding portion of the CAN bus 100 may be disconnected (open), and if the switches SW1 are in a closed state, a corresponding portion of the CAN bus 100 can be connected (closed). If the repeater mode is set to on, the switches SW1 may be set to an open state, and if the repeater mode is set to off, the switches SW1 may be set to a closed state.

The switches SW2 may be connected between the CAN high line CAN_H and the CAN transceiver 222 and between the CAN low line CAN_L and the CAN transceiver 222, respectively. If the repeater mode is set to on, the switches SW2 may be set to a closed state. The CAN transceiver 222 may be connected to the CAN bus 100 if the switches SW2 are closed.

The switches SW3 may be connected between the CAN high line CAN_H and the CAN transceiver 224 and between the CAN low line CAN_L and the CAN transceiver 224, respectively. If the repeater mode is set to on, the switches SW3 may be set to a closed state. The CAN transceiver 224 may be connected to the CAN bus 100 if the switches SW3 are closed.

That is, in the repeater mode, switches SW1 are set to an open state, and switches SW2 and SW3 are set to a closed state, so that the CAN bus 100 may be connected through the CAN transceiver 222 and the CAN transceiver 224.

The repeater circuit 220 may further include a fourth switch SW4 for supplying a power voltage to the second CAN 222 transceiver and the third CAN transceiver 224 or cutting off the power voltage. The MCU 216 may control the fourth switch SW4 to be closed if the repeater mode is turned on.

The CAN transceiver 222 may include a CAN high terminal CAN_H2, a CAN low terminal CAN_L2, a transmission terminal TX2, and a reception terminal RX2. The CAN high terminal CAN_H2 and the CAN low terminal CAN_L2 may be connected to the CAN high line CAN_H and the CAN low line CAN_L of the CAN bus 100, respectively. The transmission terminal TX2 and the reception terminal RX2 may be connected to the arbitration logic 226.

The CAN transceiver 224 may include a CAN high terminal CAN_H3, a CAN low terminal CAN_L3, a transmission terminal TX3, and a reception terminal RX3. The CAN high terminal CAN_H3 and the CAN low terminal CAN_L3 may be connected to the CAN high line CAN_H and the CAN low line CAN_L of the CAN bus 100, respectively. The transmission terminal TX3 and the reception terminal RX3 may be connected to the arbitration logic 226.

The arbitration logic 226 transmits and receives CAN data between CAN transceiver 222 and CAN transceiver 224. The arbitration logic 226 may receive CAN data transmitted from the transmission terminal TX2 of the CAN transceiver 222 and transmit it to the reception terminal RX3 of the CAN transceiver 224. The arbitration logic 226 may receive CAN data transmitted from the transmission terminal TX3 of the CAN transceiver 224 and transmit it to the reception terminal RX2 of the CAN transceiver 222. The arbitration logic 226 also feedbacks CAN data received between CAN transceivers 222 and CAN transceivers 224 to MCU 216.

The MCU 216 monitors an operation state of the repeater mode of the CAN communication apparatus 200 using the feedbacked CAN data.

The arbitration logic 226 may feedback CAN data transmitted and received between the second CAN transceiver 222 and the third CAN transceiver 224 to the MCU 216 and the MCU 216 may monitor an operation state of the repeater mode using feedbacked CAN data.

The switch SW4 may be connected between a power terminal supplying the power supply voltage VCC and a node N1. The node N1 may be connected to CAN transceiver 222 and CAN transceiver 224. If the repeater mode is set to on, the switch SW4 may be set to a closed state. If the switch SW4 is in a closed state, the power supply voltage VCC may be supplied to the CAN transceiver 222 and the CAN transceiver 224. If the repeater mode is set to OFF, the switch SW4 may be set to an open state. If the switch SW4 is in an open state, the power supply voltage VCC may not be supplied to the CAN transceiver 222 and the CAN transceiver 224.

The operation mode of the CAN communication apparatus 200 may be determined according to a setup signal S_setup input from the outside. As an example, the setup signal S_setup may have a high level or a low level, and if the setup signal S_setup with the high level is input, the CAN communication apparatus 200 may set the repeater mode to on, and if the setup signal S_setup with the low level is input, the CAN communication apparatus 200 may set the repeater mode to off.

The MCU 216 may control the switches SW1, SW2, SW3, and SW4 to turn on or off the repeater mode according to the setup signal S_setup input from the outside.

The MCU 216 may set the repeater mode to be off by controlling the switches SW1 to be closed and the switches SW2, SW3, and SW4 to be open. Then, the CAN communication apparatus 200 may operate only in the CAN communication mode.

The MCU 216 may set the repeater mode to be on by controlling the switches SW1 to be opened and the switches SW2, SW3, and SW4 to be closed. Then, the CAN communication apparatus 200 may also operate in a repeater mode together with the CAN communication mode.

The MCU 216 sets the first switch to a closed state and may set the second switch and the third switch to an open state, based on the setup signal S, to turn off the repeater mode.

If the CAN communication apparatus 200 operates in a repeater mode and performs a repeater function, a physical communication distance of CAN communication may be increased and a communication signal can be strengthened.

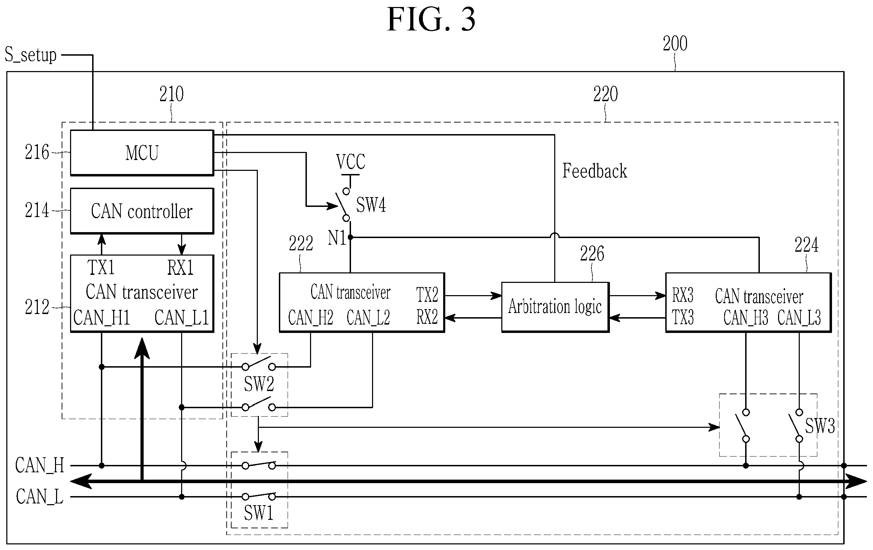

FIG. 3 is a diagram illustrating an operation of a CAN communication apparatus if a repeater mode is off according to an embodiment.

Referring to FIG. 3, the repeater mode may be set to off based on the setup signal S_setup.

In order to set the repeater mode to off, the MCU 216 of the CAN communication apparatus 200 may control the switches SW1 to a closed state and control the switches SW2, SW3, and SW4 to an open state. At this time, by setting the switches SW2 and SW3 to an open state, unnecessary input to the CAN transceivers 222 and 224 may be prevented. In addition, by setting the switch SW4 to the open state, the supply of the power supply voltage VCC to the CAN transceivers 222 and 224 may be cut off to prevent unintentional operation, and power consumption of the CAN communication apparatus 200 may be reduced.

If the repeater mode is set to off, the CAN communication apparatus 200 operate only in the CAN communication mode for performing basic CAN communication, and the repeater function of the repeater mode may not be performed. That is, the CAN communication apparatus 200 may receive CAN data transmitted through the CAN bus 100, generate CAN data to be transmitted, and transmit the CAN data to the CAN bus 100.

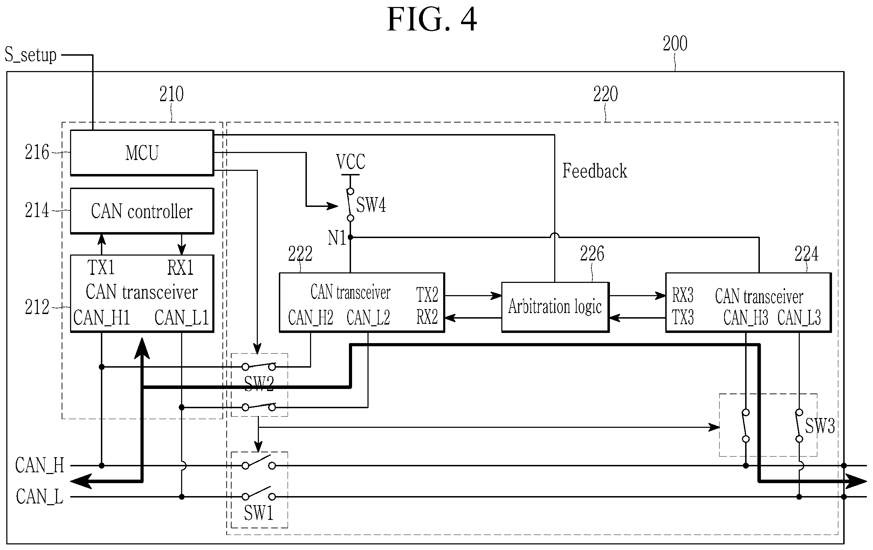

FIG. 4 is a diagram illustrating an operation of a CAN communication apparatus if a repeater mode is on according to an embodiment.

Referring to FIG. 4, the repeater mode may be set to on according to the setup signal S_setup. In this case, the CAN communication apparatus 200 may also operate in the repeater mode together with the CAN communication mode.

In order to set the repeater mode, the MCU 216 of the CAN communication apparatus 200 may control the switches SW1 to an open state and control the switches SW2, SW3, and SW4 to a closed state.

If the switches SW1 are open, the portion of the CAN bus 100 to which the switches SW1 are connected is disconnected, so that CAN data cannot be transmitted or received through the portion to which the switches SW1 are connected.

Meanwhile, because the switches SW1 are open and the switches SW2, SW3, and SW4 are closed, the power supply voltage VCC may be supplied to the CAN transceiver 222 and the CAN transceiver 224 so that the CAN transceiver 222 and the CAN transceiver 224 can operate. By operating CAN transceiver 222 and CAN transceiver 224, the CAN communication apparatus 200 may be serially connected with CAN bus 100 through the CAN transceiver 222, the arbitration logic 226 and the CAN transceiver 224. Accordingly, CAN data may be transferred to the CAN bus 100 through the CAN transceiver 222, the arbitration logic 226 and the CAN transceiver 224 of the CAN communication apparatus 200. That is, the CAN communication apparatus 200 may perform a repeater function of CAN data.

Also, the CAN transceiver 212 may receive CAN data from the CAN bus 100 and transmit CAN data generated by the MCU 216 to the CAN bus 100. That is, even if the CAN communication apparatus 200 is set to the repeater mode, it can perform the operation of the CAN communication mode.

In addition, the MCU 216 may monitor the operation state of the repeater mode using the feedbacked CAN data from the arbitration logic 226. The monitoring of an operation state of the repeater mode may use CAN data transmitted and received between the second CAN transceiver 222 and the third CAN transceiver 224.

Moreover, CAN data may be generated by the MCU 216 through the first CAN transceiver 212 followed by monitoring the operation state of the repeater mode through comparison of CAN data generated by the MCU 216 and CAN data transmitted and received between the second CAN transceiver 222 and the third CAN transceiver 224.

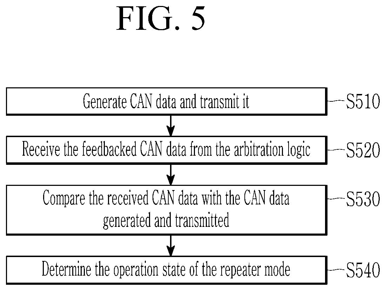

FIG. 5 is a flowchart illustrating a method of monitoring an operating state of a relay mode according to an embodiment.

Referring to FIG. 5, the MCU 216 may generate CAN data to be transmitted and transmit it to the CAN bus 100 through the CAN transceiver 212 (S510).

If the CAN communication apparatus 200 operates in repeater mode, CAN data transferred from the CAN transceiver 212 to the CAN bus 100 may be relayed through the CAN transceiver 222, the arbitration logic 226 and the CAN transceiver 224. The arbitration logic 226 may feedback received CAN data to MCU 216.

The MCU 216 may receive the feedbacked CAN data from the arbitration logic 226 (S520).

The MCU 216 may compare the received CAN data with the CAN data generated by the MCU 216 and transmitted to the CAN transceiver 212 (S530), and determine the operation state of the repeater mode based on the comparison result (S540).

For example, if the MCU 216 has the same data as the CAN data generated by the MCU 216 and transmitted to the CAN transceiver 212 among the CAN data received from the arbitration logic 226, may determine that the operation state of the repeater mode is good (normal). On the other hand, if the MCU 216 does not have the same data as the CAN data generated by the MCU 216 and transmitted to the CAN transceiver 212 among the CAN data received from the arbitration logic 226, may determine that the operation state of the repeater mode is poor (error). If the operation state of the repeater mode is poor (error), the MCU 216 may output an alarm signal notifying it.

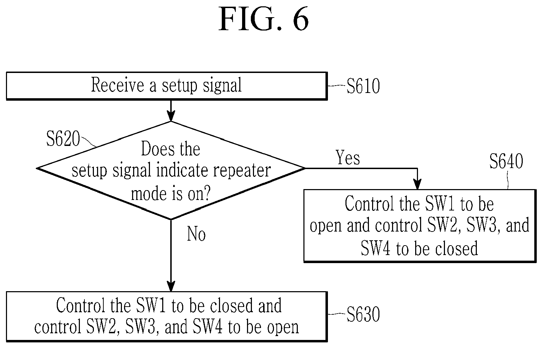

FIG. 6 is a flowchart illustrating a repeater mode setting method according to an embodiment.

Referring to FIG. 6, the MCU 216 may receive a setup signal S_setup (S610).

The MCU 216 may set the repeater mode to on or off based on the setup signal S_setup.

If the setup signal S_setup indicates off of the repeater mode (S620), the MCU 216 may control the switches SW1 to be closed and control the switches SW2, SW3, and SW4 to be open (S630). In this way, the CAN communication apparatus 200 may set the repeater mode to off and operate in a basic CAN communication mode.

Meanwhile, if the setup signal S_setup indicates on of the repeater mode (S620), the MCU 216 may control the switches SW1 to be open and control the switches SW2, SW3, and SW4 to be closed (S640). In this way, the portion where the switches SW1 are located in the CAN bus 100 may be open, the CAN bus 100 may be connected in series through the CAN transceiver 222, the arbitration logic 226 and the CAN transceiver 224, and the CAN communication apparatus 200 may perform a repeater operation in a repeater mode through the CAN transceiver 222, the arbitration logic 226 and the CAN transceiver 224.

According to at least one embodiment, it is possible to increase the CAN communication distance having a physical limit on the CAN bus without installing an external repeater, to strengthen the CAN communication signal, and to increase the number of nodes accessible on the CAN bus. In addition, reliability of extended communication functions can be secured through monitoring of relay operations.

### <Description of symbols>

- 100:: CAN bus
- 200:: CAN communication apparatus
- 200_1, 200_2, 200_3:: Communication nodes
- 210:: CAN communication circuit
- 220:: Repeater circuit
- 212:: First CAN transceiver
- 222:: Second CAN transceiver
- 224:: Third CAN transceiver
- 214:: CAN controller
- 216:: MCU
- 226:: Arbitration logic
- S:: Setup signal

## Claims

1. A controller area network, CAN, communication apparatus that communicates through a CAN bus (100), the CAN communication apparatus (200) comprising:
a CAN communication circuit (210) including a first CAN transceiver (212) connected to the CAN bus (100) and transmitting and receiving CAN data through the first CAN transceiver (212); and
if set to repeater mode, a repeater circuit (220) that relays CAN data on the CAN bus (100) by setting a connection with the CAN bus (100),
wherein the repeater circuit (220) comprises:
a first switch serially connected to the CAN bus (100);
a second CAN transceiver (222) connected to the CAN bus (100);
a third CAN transceiver (224) connected to the CAN bus (100);
an arbitration logic (226) for transmitting and receiving CAN data between the second CAN transceiver (222) and the third CAN transceiver (224);
a second switch connected between the CAN bus (100) and the second CAN transceiver (222); and
a third switch connected between the CAN bus (100) and the third CAN transceiver (224),
a micro controller unit, MCU, (216) for setting the repeater mode to on or off according to a setup signal (S), and
the MCU (216) sets the first switch to an open state and sets the second switch and the third switch to a closed state, based on the setup signal (S), to turn on the repeater mode,
wherein
the arbitration logic (226) feeds back CAN data transmitted and received between the second CAN transceiver (222) and the third CAN transceiver (224) to the MCU (216), and
the MCU (216) monitors an operation state of the repeater mode using feedbacked CAN data.

2. **The** CAN communication apparatus (200) as claimed in claim 1, wherein the MCU (216) sets the first switch to a closed state and sets the second switch and the third switch to an open state, based on the setup signal (S), to turn off the repeater mode.

3. **The** CAN communication apparatus (200) as claimed in claim 1 or 2, wherein
the repeater circuit (220) further comprises a fourth switch for supplying a power voltage to the second CAN transceiver (222) and the third CAN transceiver (224) or cutting off the power voltage, and
the MCU (216) controls the fourth switch to be closed if the repeater mode is turned on.

4. The CAN communication apparatus (200) as claimed in any of claims 1 to 3, wherein the first CAN transceiver (212) comprises a CAN high terminal CAN_H1, a CAN low terminal CAN_L1, a transmission terminal TX1, and a reception terminal RX1 and
the CAN high terminal CAN_H1 and the CAN low terminal CAN_L1 are connected to the CAN high line CAN_H and the CAN low line CAN_L of the CAN bus 100 and
the transmission terminal TX1 and the reception ion terminal RX1 are connected to the CAN controller (214).

5. The CAN communication apparatus (200) as claimed in any of claims 1 to 4, wherein the second CAN transceiver 222 comprises a CAN high terminal CAN_H2, a CAN low terminal CAN_L2, a transmission terminal TX2, and a reception terminal RX2 and
the CAN high terminal CAN_H2 and the CAN low terminal CAN_L2 are connected to the CAN high line CAN_H and the CAN low line CAN_L of the CAN bus 100 and
the transmission terminal TX2 and the reception terminal RX2 are connected to the arbitration logic (226).

6. The CAN communication apparatus (200) as claimed in any of claims 1 to 5, wherein the third CAN transceiver 224 comprises a CAN high terminal CAN_H3, a CAN low terminal CAN_L3, a transmission terminal TX3, and a reception terminal RX3 and
the CAN high terminal CAN_H3 and the CAN low terminal CAN_L3 are connected to the CAN high line CAN_H and the CAN low line CAN_L of the CAN bus 100 and
the transmission terminal TX3 and the reception terminal RX3 may be connected to the arbitration logic (226).

7. A controller area network, CAN, communication method of a CAN communication apparatus (200) connected to the CAN bus (100), the CAN communication method comprising:
performing CAN communication through a first CAN transceiver (212) connected to the CAN bus (100);
operation in a repeater mode by setting a connection with the CAN bus (100) based on a setup signal (S);
relaying CAN data on the CAN bus (100) in the repeater mode, and
monitoring an operation state of the repeater mode using CAN data transmitted and received between a second CAN transceiver (222) and a third CAN transceiver (224),
wherein
the CAN communication apparatus (200) comprises:
a micro controller unit, MCU, (216) controlling the CAN communication through the first CAN transceiver (212);
a first switch serially connected to the CAN bus (100);
the second CAN transceiver (222) connected to the CAN bus (100);
the third CAN transceiver (224) connected to the CAN bus (100);
an arbitration logic (226) for transmitting and receiving CAN data between the second CAN transceiver (222) and the third CAN transceiver (224);
a second switch connected between the CAN bus (100) and the second CAN transceiver (222); and
a third switch connected between the CAN bus (100) and the third CAN transceiver (224), and
the operating in the repeater mode comprises setting the first switch to an open state and setting the second switch and the third switch to a closed state.

8. **The** CAN communication method as claimed in claim 7, further comprising:
turning off the repeater mode by disconnecting from the CAN bus (100) based on the setup signal (S), and
wherein the turning off the repeater mode comprises setting the first switch to a closed state and setting the second switch and the third switch to an open state.

9. **The** CAN communication method as claimed in any of claims 7 to 8, wherein
the operating in the repeater mode further comprises supplying a power supply voltage to the second CAN transceiver (222) and the third CAN transceiver (224), and
the turning off the repeater mode further comprises cutting off the power supply voltage to the second CAN transceiver (222) and the third CAN transceiver (224).

10. **The** CAN communication method as claimed in any of claims 7 to 9, wherein
the monitoring comprises:
transmitting CAN data generated by the MCU (216) through the first CAN transceiver (212); and
monitoring the operation state of the repeater mode through comparison of CAN data generated by the MCU (216) and CAN data transmitted and received between the second CAN transceiver (222) and the third CAN transceiver (224).

## Patentansprüche

1. Controller Area Network-, CAN, -Kommunikationsvorrichtung, die über einen CAN-Bus (100) kommuniziert, wobei die CAN-Kommunikationsvorrichtung (200) Folgendes umfasst:
eine CAN-Kommunikationsschaltung (210), die einen ersten CAN-Transceiver (212) umfasst, der mit dem CAN-Bus (100) verbunden ist, und CAN-Daten über den ersten CAN-Transceiver (212) sendet und empfängt; und
falls in den Repeater-Modus versetzt, eine Repeater-Schaltung (220), die CAN-Daten auf dem CAN-Bus (100) weiterleitet, indem sie eine Verbindung mit dem CAN-Bus (100) herstellt,
wobei die Repeater-Schaltung (220) Folgendes umfasst:
einen ersten Schalter, der in Reihe mit dem CAN-Bus (100) geschaltet ist;
einen zweiten CAN-Transceiver (222), der mit dem CAN-Bus (100) verbunden ist;
einen dritten CAN-Transceiver (224), der mit dem CAN-Bus (100) verbunden ist;
eine Arbitrierungslogik (226) zum Senden und Empfangen von CAN-Daten zwischen dem zweiten CAN-Transceiver (222) und dem dritten CAN-Transceiver (224);
einen zweiten Schalter, der zwischen dem CAN-Bus (100) und dem zweiten CAN-Transceiver (222) geschaltet ist; und
einen dritten Schalter, der zwischen dem CAN-Bus (100) und dem dritten CAN-Transceiver (224) geschaltet ist,
eine Mikrocontroller-Einheit, MCU, (216) zum Ein- oder Ausschalten des Repeater-Modus entsprechend einem Setup-Signal (S), und
die MCU (216) den ersten Schalter in einen offenen Zustand und den zweiten und den dritten Schalter in einen geschlossenen Zustand basierend auf dem Setup-Signal (S) versetzt, um den Repeater-Modus einzuschalten,
wobei
die Arbitrierungslogik (226) die zwischen dem zweiten CAN-Transceiver (222) und dem dritten CAN-Transceiver (224) gesendeten und empfangenen CAN-Daten an die MCU (216) zurückmeldet, und
die MCU (216) einen Betriebszustand des Repeater-Modus unter Verwendung der zurückgemeldeten CAN-Daten überwacht.

2. CAN-Kommunikationsvorrichtung (200) nach Anspruch 1, wobei
die MCU (216) den ersten Schalter in einen geschlossenen Zustand und den zweiten Schalter und den dritten Schalter in einen offenen Zustand basierend auf dem Setup-Signal (S) versetzt, um den Repeater-Modus auszuschalten.

3. CAN-Kommunikationsvorrichtung (200) nach Anspruch 1 oder 2, wobei
die Repeater-Schaltung (220) ferner einen vierten Schalter zum Versorgen des zweiten CAN-Transceivers (222) und des dritten CAN-Transceivers (224) mit einer Leistungsspannung oder zum Abschalten der Leistungsspannung umfasst, und
die MCU (216) den vierten Schalter so steuert, dass er geschlossen wird, wenn der Repeater-Modus eingeschaltet ist.

4. CAN-Kommunikationsvorrichtung (200) nach einem der Ansprüche 1 bis 3, wobei der erste CAN-Transceiver (212) einen CAN-High-Anschluss CAN_H1, einen CAN-Low-Anschluss CAN_L1, einen Sendeanschluss TX1 und einen Empfangsanschluss RX1 umfasst, und
der CAN-High-Anschluss CAN_H1 und der CAN-Low-Anschluss CAN_L1 mit der CAN-High-Leitung CAN_H und der CAN-Low-Leitung CAN_L des CAN-Busses 100 verbunden sind, und
der Sendeanschluss TX1 und der Empfangsanschluss RX1 mit dem CAN-Controller (214) verbunden sind.

5. CAN-Kommunikationsvorrichtung (200) nach einem der Ansprüche 1 bis 4, wobei der zweite CAN-Transceiver 222 einen CAN-High-Anschluss CAN_H2, einen CAN-Low-Anschluss CAN_L2, einen Sendeanschluss TX2 und einen Empfangsanschluss RX2 umfasst, und
der CAN-High-Anschluss CAN_H2 und der CAN-Low-Anschluss CAN_L2 mit der CAN-High-Leitung CAN_H und der CAN-Low-Leitung CAN_L des CAN-Busses 100 verbunden sind, und
der Sendeanschluss TX2 und der Empfangsanschluss RX2 mit der Arbitrierungslogik (226) verbunden sind.

6. CAN-Kommunikationsvorrichtung (200) nach einem der Ansprüche 1 bis 5, wobei der dritte CAN-Transceiver 224 einen CAN-High-Anschluss CAN_H3, einen CAN-Low-Anschluss CAN_L3, einen Sendeanschluss TX3 und einen Empfangsanschluss RX3 umfasst, und
der CAN-High-Anschluss CAN_H3 und der CAN-Low-Anschluss CAN_L3 mit der CAN-High-Leitung CAN_H und der CAN-Low-Leitung CAN_L des CAN-Busses 100 verbunden sind, und
der Sendeanschluss TX3 und der Empfangsanschluss RX3 mit der Arbitrierungslogik (226) verbunden sein können.

7. Controller Area Network-, CAN, -Kommunikationsverfahren einer mit dem CAN-Bus (100) verbundenen CAN-Kommunikationsvorrichtung (200), wobei das CAN-Kommunikationsverfahren Folgendes umfasst:
Durchführen einer CAN-Kommunikation über einen ersten CAN-Transceiver (212), der mit dem CAN-Bus (100) verbunden ist;
Betrieb in einem Repeater-Modus durch Herstellen einer Verbindung mit dem CAN-Bus (100) auf der Grundlage eines Setup-Signals (S);
Weiterleiten von CAN-Daten auf dem CAN-Bus (100) im Repeater-Modus und
Überwachen eines Betriebszustands des Repeater-Modus unter Verwendung von CAN-Daten, die zwischen einem zweiten CAN-Transceiver (222) und einem dritten CAN-Transceiver (224) gesendet und empfangen werden,
wobei
die CAN-Kommunikationsvorrichtung (200) Folgendes umfasst:
eine Mikrocontroller-Einheit, MCU, (216), die die CAN-Kommunikation über den ersten CAN-Transceiver (212) steuert;
einen ersten Schalter, der in Reihe mit dem CAN-Bus (100) geschaltet ist;
den zweiten CAN-Transceiver (222), der mit dem CAN-Bus (100) verbunden ist;
den dritten CAN-Transceiver (224), der mit dem CAN-Bus (100) verbunden ist;
eine Arbitrierungslogik (226) zum Senden und Empfangen von CAN-Daten zwischen dem zweiten CAN-Transceiver (222) und dem dritten CAN-Transceiver (224);
einen zweiten Schalter, der zwischen dem CAN-Bus (100) und dem zweiten CAN-Transceiver (222) geschaltet ist; und
einen dritten Schalter, der zwischen dem CAN-Bus (100) und dem dritten CAN-Transceiver (224) geschaltet ist, und
der Betrieb im Repeater-Modus das Versetzen des ersten Schalters in einen offenen Zustand und das Versetzen des zweiten Schalters und des dritten Schalters in einen geschlossenen Zustand umfasst.

8. CAN-Kommunikationsverfahren nach Anspruch 7, umfassend ferner:
Ausschalten des Repeater-Modus durch Trennen vom CAN-Bus (100) auf der Grundlage des Setup-Signals (S), und
wobei das Ausschalten des Repeater-Modus das Versetzen des ersten Schalters in einen geschlossenen Zustand und das Versetzen des zweiten Schalters und des dritten Schalters in einen offenen Zustand umfasst.

9. CAN-Kommunikationsverfahren nach einem der Ansprüche 7 bis 8, wobei
der Betrieb im Repeater-Modus ferner das Versorgen des zweiten CAN-Transceivers (222) und des dritten CAN-Transceivers (224) mit einer Versorgungsspannung umfasst, und
das Ausschalten des Repeater-Modus ferner das Abschalten der Versorgungsspannung zu dem zweiten CAN-Transceiver (222) und dem dritten CAN-Transceiver (224) umfasst.

10. CAN-Kommunikationsverfahren nach einem der Ansprüche 7 bis 9, wobei
das Überwachen Folgendes umfasst:
Senden von durch die MCU (216) erzeugten CAN-Daten über den ersten CAN-Transceiver (212); und
Überwachen des Betriebszustands des Repeater-Modus durch Vergleichen der von der MCU (216) erzeugten CAN-Daten mit den zwischen dem zweiten CAN-Transceiver (222) und dem dritten CAN-Transceiver (224) gesendeten und empfangenen CAN-Daten.

## Revendications

1. Appareil de communication en réseau de zone de contrôleur, CAN, qui communique par le biais d'un bus CAN (100), l'appareil de communication CAN (200) comportant :
un circuit de communication CAN (210) incluant un premier émetteur-récepteur CAN (212) connecté au bus CAN (100) et transmettant et recevant des données CAN par l'intermédiaire du premier émetteur-récepteur CAN (212) ; et
s'il est réglé en mode répéteur, un circuit répéteur (220) qui relaie des données CAN sur le bus CAN (100) en établissant une connexion avec le bus CAN (100),
dans lequel le circuit répéteur (220) comporte :
un premier commutateur connecté en série au bus CAN (100) ;
un deuxième émetteur-récepteur CAN (222) connecté au bus CAN (100) ;
un troisième émetteur-récepteur CAN (224) connecté au bus CAN (100) ;
une logique d'arbitrage (226) pour transmettre et recevoir des données CAN entre le deuxième émetteur-récepteur CAN (222) et le troisième émetteur-récepteur CAN (224) ;
un deuxième commutateur monté entre le bus CAN (100) et le deuxième émetteur-récepteur CAN (222) ; et
un troisième commutateur monté entre le bus CAN (100) et le troisième émetteur-récepteur CAN (224),
une unité microcontrôleur, MCU, (216) pour régler l'activation ou la désactivation du mode répéteur selon un signal de configuration (S), et
la MCU (216) règle le premier commutateur sur un état ouvert et règle le deuxième commutateur et le troisième commutateur sur un état fermé, sur la base du signal de configuration (S), pour activer le mode répéteur,
dans lequel
la logique d'arbitrage (226) renvoie des données CAN transmises et reçues entre le deuxième émetteur-récepteur CAN (222) et le troisième émetteur-récepteur CAN (224) à la MCU (216), et
la MCU (216) surveille un état de fonctionnement du mode répéteur à l'aide de données CAN renvoyées.

2. Appareil de communication CAN (200) selon la revendication 1, dans lequel
la MCU (216) règle le premier commutateur sur un état fermé et règle le deuxième commutateur et le troisième commutateur sur un état ouvert, sur la base du signal de configuration (S), pour désactiver le mode répéteur.

3. Appareil de communication CAN (200) selon la revendication 1 ou 2, dans lequel
le circuit répéteur (220) comporte en outre un quatrième commutateur pour alimenter en tension d'alimentation le deuxième émetteur-récepteur CAN (222) et le troisième émetteur-récepteur CAN (224) ou couper la tension d'alimentation, et
la MCU (216) commande la fermeture du quatrième commutateur si le mode répéteur est activé.

4. Appareil de communication CAN (200) selon l'une quelconque des revendications 1 à 3, dans lequel le premier émetteur-récepteur CAN (212) comporte une borne CAN haute vitesse CAN_H1, une borne CAN basse vitesse CAN_L1, une borne d'émission TX1 et une borne de réception RX1 et
la borne CAN haute vitesse CAN_H1 et la borne CAN basse vitesse CAN_L1 sont connectées à la ligne CAN haute vitesse CAN_H et à la ligne CAN basse vitesse CAN_L du bus CAN 100 et
la borne d'émission TX1 et la borne d'ion de réception RX1 sont connectées au contrôleur CAN (214).

5. Appareil de communication CAN (200) selon l'une quelconque des revendications 1 à 4, dans lequel le deuxième émetteur-récepteur CAN 222 comporte une borne CAN haute vitesse CAN_H2, une borne CAN basse vitesse CAN_L2, une borne d'émission TX2 et une borne de réception RX2 et
la borne CAN haute vitesse CAN_H2 et la borne CAN basse vitesse CAN_L2 sont connectées à la ligne CAN haute vitesse CAN_H et à la ligne CAN basse vitesse CAN_L du bus CAN 100 et
la borne d'émission TX2 et la borne de réception RX2 sont connectées à la logique d'arbitrage (226).

6. Appareil de communication CAN (200) selon l'une quelconque des revendications 1 à 5, dans lequel le troisième émetteur-récepteur CAN 224 comporte une borne CAN haute vitesse CAN_H3, une borne CAN basse vitesse CAN_L3, une borne d'émission TX3 et une borne de réception RX3 et
la borne CAN haute vitesse CAN_H3 et la borne CAN basse vitesse CAN_L3 sont connectées à la ligne CAN haute vitesse CAN_H et à la ligne CAN basse vitesse CAN_L du bus CAN 100 et
la borne d'émission TX3 et la borne de réception RX3 peuvent être connectées à la logique d'arbitrage (226).

7. Procédé de communication en réseau de zone de contrôleur, CAN, d'un appareil de communication CAN (200) connecté au bus CAN (100), le procédé de communication CAN comportant :
la réalisation d'une communication CAN par le biais d'un premier émetteur-récepteur CAN (212) connecté au bus CAN (100) ;
le fonctionnement dans un mode répéteur en établissant une connexion avec le bus CAN (100) sur la base d'un signal de configuration (S) ;
le fait de relayer des données CAN sur le bus CAN (100) en mode répéteur, et
la surveillance d'un état de fonctionnement du mode répéteur à l'aide de données CAN transmises et reçues entre un deuxième émetteur-récepteur CAN (222) et un troisième émetteur-récepteur CAN (224),
dans lequel
l'appareil de communication CAN (200) comporte :
une unité microcontrôleur, MCU, (216) commandant la communication CAN par l'intermédiaire du premier émetteur-récepteur CAN (212) ;
un premier commutateur connecté en série au bus CAN (100) ;
le deuxième émetteur-récepteur CAN (222) connecté au bus CAN (100) ;
le troisième émetteur-récepteur CAN (224) connecté au bus CAN (100) ;
une logique d'arbitrage (226) pour transmettre et recevoir des données CAN entre le deuxième émetteur-récepteur CAN (222) et le troisième émetteur-récepteur CAN (224) ;
un deuxième commutateur monté entre le bus CAN (100) et le deuxième émetteur-récepteur CAN (222) ; et
un troisième commutateur monté entre le bus CAN (100) et le troisième émetteur-récepteur CAN (224), et
le fonctionnement en mode répéteur comporte le réglage du premier commutateur sur un état ouvert et le réglage du deuxième commutateur et du troisième commutateur sur un état fermé.

8. Procédé de communication CAN selon la revendication 7, comportant en outre :
la désactivation du mode répéteur en se déconnectant du bus CAN (100) sur la base du signal de configuration (S), et
dans lequel la désactivation du mode répéteur comporte le réglage du premier commutateur sur un état fermé et le réglage du deuxième commutateur et du troisième commutateur sur un état ouvert.

9. Procédé de communication CAN selon l'une quelconque des revendications 7 à 8, dans lequel
le fonctionnement en mode répéteur comporte en outre l'alimentation en tension d'alimentation du deuxième émetteur-récepteur CAN (222) et du troisième émetteur-récepteur CAN (224), et
la désactivation du mode répéteur comporte en outre la coupure de la tension d'alimentation vers le deuxième émetteur-récepteur CAN (222) et le troisième émetteur-récepteur CAN (224).

10. Procédé de communication CAN selon l'une quelconque des revendications 7 à 9, dans lequel
la surveillance comporte :
la transmission de données CAN générées par la MCU (216) par l'intermédiaire du premier émetteur-récepteur CAN (212) ; et
la surveillance de l'état de fonctionnement du mode répéteur par comparaison de données CAN générées par la MCU (216) et de données CAN transmises et reçues entre le deuxième émetteur-récepteur CAN (222) et le troisième émetteur-récepteur CAN (224).
